# EUROPEAN PATENT APPLICATION

(11) **EP 2 099 239 A1**
(43) Date of publication of application: **09.09.2009**
(21) Application number: 08152471.2
(22) Date of filing: 07.03.2008
(51) Int. Cl.: H04W 4/00

(54) **Apparatus and method for call routing information**

(71) Applicant: Nokia Siemens Networks Oy, 02610 Espoo (FI)
(72) Inventor: Mantynen, Mika T., 1121, Budapest (HU); Kallio, Juha, 01610, Vantaa (FI)
(74) Representative: TBK-Patent

(57) **Abstract**

Embodiments provide a method and apparatus for providing routing information wherein, after sending a routing information inquiry (4.) to a visitor information device (1), an address change (6.) of an address of the visitor information device or of an entity storing subscriber location information, such as a visitor location register (2), is monitored (11.). When detecting an address change, a routing information inquiry (12.) is sent to another visitor information device (2) indicated by the changed address even before receiving a response to the first inquiry.

## Description

### FIELD OF TECHNOLOGY AND BACKGROUND

The invention generally relates to communication and network elements, methods, apparatuses, systems and programs of or for communication.

Registration of a mobile subscriber's location information is defined in 3GPP TS 23.012. A way of using the location information in mobile terminated call, i.e. a call directed to a mobile, is described in 3GPP TS 23.018. The address of a subscriber's serving mobile switching centre, MSC, is recorded in home location register, HLR, e.g. in a location update, and the location area is stored on a temporary basis. Further, one or more visitor location registers, VLRs may be provided for one or more visiting or roaming callers.

When second generation, 2G, and third generation, 3G, radio networks are covered by different mobile switching centres, MSCs, the number of inter-VLR location updates increases. When a subscriber moves between location areas served by one or more different visitor location registers of one or more networks, Inter-VLR location updates may be performed to maintain the current location of the subscriber in the network.

Inter-VLR location update is a significantly longer process than e.g. intra-VLR location because of security procedures and subscription data download from HLR. Therefore the time that a subscriber is not available for paging is increased. If the subscriber is making an inter-VLR location update when he/she is being called, the call may be routed to a wrong MSC, e.g. to the MSC that the subscriber already left.

The same problem exists in any inter-VLR location updates or other updates, and also within one radio access technology.

3GPP TS 23.018 specifies a mobile terminating, MT, roaming retry. This approach requires implementation in a terminating visited mobile switching centre, VMSC, a gateway mobile switching centre, GMSC, and in the home location register, HLR. This implementation can present problems e.g. in a multi-vendor network. Further, corrective actions will start only when a call has been routed to the wrong VMSC and all the paging efforts have failed. This may take quite a long time. In many cases a calling party may not wait until the final paging failure. In that case the end-user experience may not be good, and the success rate of mobile terminated calls may be low.

An approach to improve the success rate of mobile terminated calls, MTCs, success rate is pre-paging as described in 3GPP TS 23.018, specifying the use of pre-paging in mobile terminated call. This feature may reduce the call setup-time and may also improve the MTC success rate because the subscriber is paged in an earlier stage of the call setup, at a stage where the HLR's VLR address is read. After successful pre-paging the subscriber may not anymore make a location update to another MSC and therefore remain to be reachable from the 'anchor-MSC' to which the call setup is routed. However, if the security routines of the inter-VLR location update have already started when a send routing information, SRI, message is sent to HLR, the pre-page will not make the call successful. When the location update is finished, the MSC's paging efforts are made in the wrong MSC.

### SUMMARY

Embodiments provide a method, apparatus, network, and computer program product as defined in the claims.

In accordance with one, more or all of the embodiments of the invention, a changed VLR address can be detected as soon as possible. The information in the HLR can be used to send a message for getting a roaming number of the terminated call to the correct VLR. The message may e.g. be a Provide Roaming Number, PRN, message.

Optionally, at least some of the MSCs in the network support standard pre-paging.

In accordance with at least one or more of the embodiments, the invention provides a method and apparatus configured to resend a message requesting to provide a roaming number, for example a "Provide Roaming Number" message.

Embodiments provide a method and apparatus for providing routing information wherein, after sending a routing information inquiry to a visitor information device, an address change of an address of the visitor information device or of an entity storing subscriber location information, such as a visitor location register, is monitored. When detecting an address change, a routing information inquiry is sent to another visitor information device indicated by the changed address even before receiving a response to the first inquiry.

Embodiments can be used for and in e.g. mobile core networks, and are able to provide an improvement of the success rate of mobile terminated calls.

Other objects, features and advantages of the invention will become apparent from the following description of embodiments of the invention.

### BRIEF DESCRIPTION OF DRAWINGS

Fig. 1 illustrates embodiments of a method, apparatus, and network in accordance with the invention;
Fig. 2 shows an example of a basic mobile terminal call setup with VLR address update;
Fig. 3 illustrates another example of an embodiment with PRN pre-page; and
Fig. 4 shows an embodiment with PRN retry functionality.

### DESCRIPTION OF EMBODIMENTS

In accordance with one, more or all of the embodiments, the invention relates to at least one of location procedures such as location updates, number providing, and paging of a roaming user.

One or more embodiments of the invention can be used for and in the general field of technology related to services core and connectivity, and for circuit switched core network, but also for other network technologies.

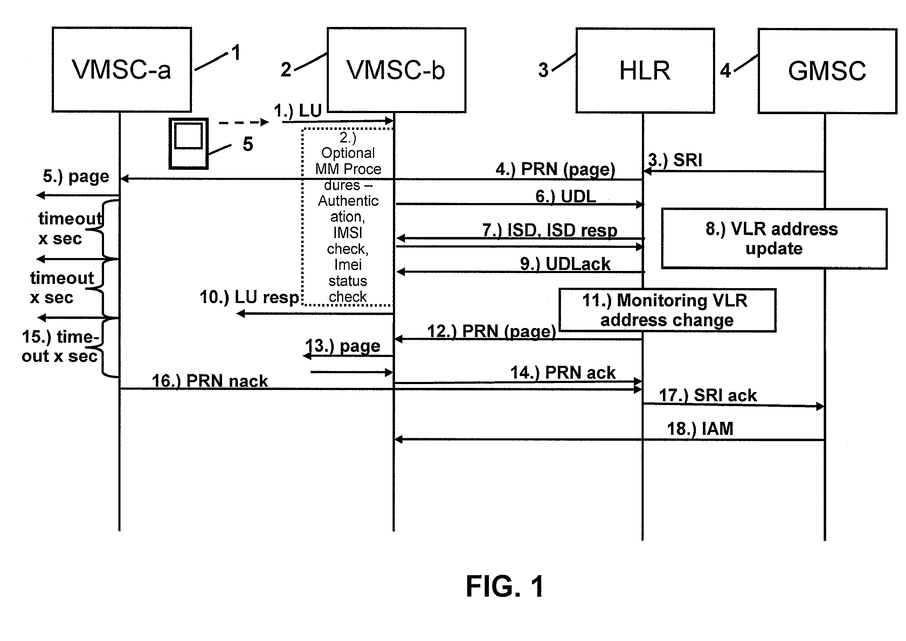

Fig. 1 shows embodiments of a method, functions, and network structures in accordance with possible implementations of the invention. Fig. 1 illustrates a visited mobile switching centre 1, VMSC-a, previously involved in handling calls to or from a roaming subscriber or roaming user equipment or terminal 5. The user equipment may be any type of a terminal being adapted for mobile communication. The terminal is optionally equipped for radio access to a network for mobile communication or data calls etc.

In the embodiment or network of Fig. 1, there is further provided a visited mobile switching centre 2, VMSC-b, a home location register, HLR, 3, and a gateway mobile switching centre, GMSC, 4.

In the embodiment of Fig. 1, in case a roaming subscriber is roaming from the area covered by VMSC-a 1 to the area covered by VMSC-b 2, a location update message, LU, may be sent as message 1.) from the terminal 5 of the called subscriber to the VMSC-b 2. The dotted line in Fig. 1 illustrates the movement of the subscriber terminal 5 to the area of VMSC-b 2.

In an optional procedure or step 2.), optional mobility management, MM, procedures may be carried out which may include one or more of authentication, a check of the international mobile subscriber identity, IMSI, and a status check of an international mobile equipment identity, IMEI, etc.

When the HLR 3 receives a routing information request 3.) such as a Send Routing Information, SRI, message from a gateway device 4 such as the GMSC, it sends a number inquiry request 4.), for example a provide roaming number, PRN, request, to the previous VMSC-a 1, optionally with an indication that pre-paging is supported. The pre-paging effect is that the processing of a PRN request takes more time than a mobile subscriber roaming number, MSRN, reservation without paging.

The VMSC-a 1 sends a paging message 5.) for paging the mobile terminal 5 so as to be able to inform the terminal on the incoming mobile-terminated call and receive a response indicating roaming number of the mobile terminal.

In step 6.), the VMSC 2 sends a UDL message to the HLR 3 which is acknowledged in step 9.). An ISD request and response are transmitted between the VMSC2 and the HLR 3 in steps 7.).

Block 8.) illustrates a VLR address update. The new VLR address will be stored in the HLR 3. Block 8 takes place right after step 6.).

A location update response 10.) is sent from the new VMSC 2 to the mobile 5 in response to the LU message 1.), as shown in Fig. 1.

During the PRN request, or during the interval e.g. between sending of the PRN request in step 4.) and e.g. receipt of a response to this request such as a PRN acknowledgement with indication of the roaming number, the HLR 3 monitors, as shown in block 11.) of Fig. 1, the subscriber's VLR address e.g. as stored in the HLR 3. The HLR comprises a monitor and/or detector device for monitoring and detecting an VLR address change. If the HLR 3 detects a change in the VLR address, it immediately sends, in step 12.) a new PRN request, optionally indicating paging support (page), to the new VLR address of VMSC-b 2, with the same contents as the first PRN request 4.) sent to the old VLR 1. The paging of the mobile 5 is initiated by the VMSC in step 13.). The paged mobile 5 will respond and send a positive PRN response 14.) to the HLR 3. The HLR 3 sends the provided roaming number MSRN to the GMSC 4 in SRI response 17.).

In step 18.) an initial address message IAM is sent from the GMSC 4 to the VMSC 2.

The change in the VLR address implies that the subscriber is no longer available in the original MSC 1 and a negative response 16.) to the original PRN request 4.) will take a long time. The paging 5.) of the mobile 5 initiated by the VMSC 1 may be repeated several times without success, with timeout after x sec, as shown in step 15.). The response 16.) sent from the old VMSC 1 to the HLR 3 after a defined number of fruitless paging trials with timeout will be negative in most cases when the VMSC has changed and the second PRN request 12.) has been sent.

It is possible however that one MSC is divided into several virtual MSCs and the change in the VLR address does not mean a change in the physical MSC. In such a case the first PRN request 4.) may succeed finally, delayed by the ongoing location update, LU. It is possible that the second PRN request 12.) succeeds also. Therefore the HLR 3 is configured to accept the first positive PRN response 14.). The HLR sends the provided roaming number MSRN to the GMSC 4 in SRI response 17.).

The HLR 3 may reset timers related to the PRN request 4.) and started when sending the request 4.), when the second PRN request 12.) is sent. The HLR 3 may continue to detect changes in the VLR address, block 11.), and may repeat the PRN resending when detecting a further change of the VLR address.

When the location update of the called subscriber is complete, it will respond to the paging (it has just made a location update so it shall be in a radio coverage area) and the VMSC 2 will acknowledge the PRN request 12.) by sending message 14.), PRN ack, with a valid roaming number MSRN.

The mobile terminated call is routed to the called subscriber's VMSC 2 and no further paging is needed because of the pre-page.

The embodiment of Fig. 1 provides an enhanced PRN retry.

In one or some embodiments, the home location register, HLR, 3 checks whether the target VLRs, e.g. a VLR of VMSC 1 or a VLR of VMSC 2, support pre-paging before applying or starting the above described logic or functions shown in Fig. 1. In one or more other embodiments no such check of pre-paging support is performed.

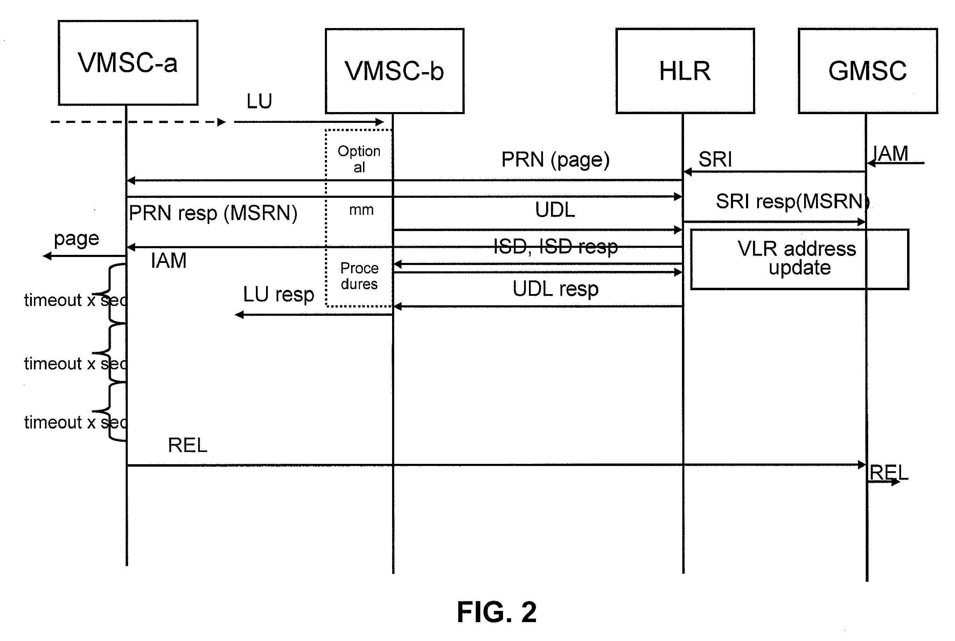

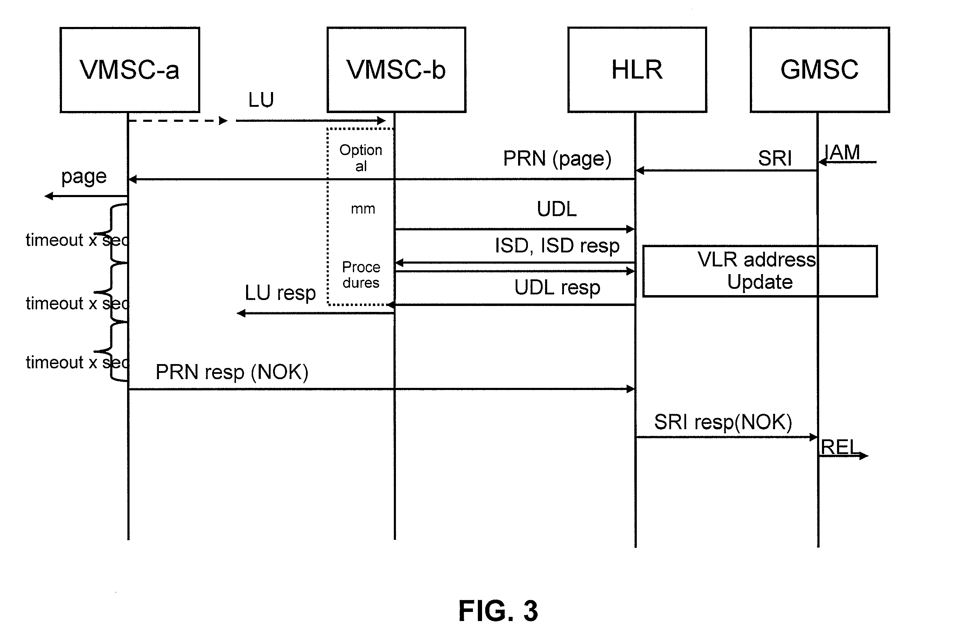

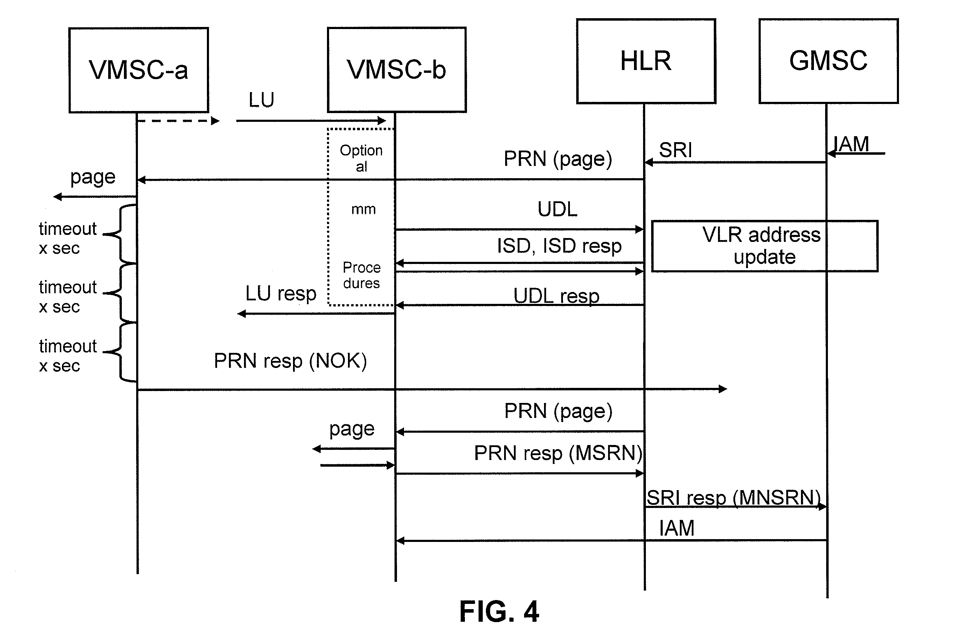

Fig. 2 shows an example of a basic MTC call setup. Fig. 3 illustrates an example of PRN pre-page, and Fig. 4 shows an example of a PRN retry. The above explanations of the embodiment of Fig. 1 also apply to the messages, steps and features 1 shown in Figs. 2 to 4.

Some embodiments of the invention relate to location update procedures e.g. in 2G and 3G networks, and may relate to inter-VLR location update or other update procedures.

In the above embodiment of Fig. 1, when the HLR 3 receives a Send Routing Information message from the GMSC 4 it sends the PRN request with indication that pre-paging is supported. During the PRN request, the HLR monitors the subscriber's VLR address. If the HLR detects a change in the VLR address, it immediately sends a new PRN to the new VLR address with the same contents as the first one. The HLR accepts the first positive PRN response and uses the provided MSRN in the SRI response to the GMSC.

The pre-paging part in MSC/VLR does not need separate implementation and may be provided with known features. The scheme described above optionally makes use of the prepaging as described.

In the HLR 3 the detection of the changed VLR address may be implemented in different ways. The HLR 3 may e.g. monitor address changes in block 11.) to detect the change in the VLR address in efficient manner. The detection can alternatively or additionally be based on some notification interface between the instances of HLR processing the location update and the SRI/PRN messages and procedures. The detection may also be implemented by polling the VLR address in the HLR database during the PRN operation corresponding to the interval between messages 4.) and 14.) of Fig. 1. The latter option, polling, may load the HLR if not implemented properly. In one or some embodiments, a first check is made only after the PRN has taken so much time without receipt of a positive PRN response that HLR 3 has reason to believe that the first page 5.) has failed. This duration may typically be one second or between 0.1 and 3 seconds, but because this time may depend on the radio network, the timer value may be user modifiable.

After the initial polling is made, the polling can be more frequent because only a fraction of the calls should cause additional VLR address polling. However, it is safe to send the second PRN later because after a VLR address change, the location update still continues and the subscriber shall not be available. In any case the MSC shall reach the subscriber with repaging but the success rate for the initial paging is better if the PRN 12.) is not sent immediately after the change in the VLR address is changed in the HLR. Optionally it is possible to set or modify the time after the VLR address change after which the second PRN is sent. All the timers mentioned above should be user modifiable.

The correct functionality can be checked with a simple end-user test. The called terminal is isolated from the radio network and transported to a location under different MSC. The call to the isolated terminal is started and after some time of assumed paging the called terminal is de-isolated. If the call will complete to this subscriber with small delay, the solution works properly.

Embodiments of the invention provide significant improvement to the MTC success and success rate.

A monitoring of the HLR-VLR interface may be provided for detecting VLR address changes.

In accordance with one or more embodiments of the invention, a method for routing information inquiry is provided, comprising:
sending a first routing information inquiry message to a first visitor information device in response to receiving a routing information request from another device,
monitoring an address change, or information indicating an address change, of an address of an entity storing subscriber location information, and
sending a second routing information inquiry message to another visitor information device in response to detecting a change of the address of the entity storing the subscriber location information.

Embodiments of the method may comprise at least one of the following:
at least one of the first and second routing information inquiry messages is a number inquiry message or a provide roaming number request,
sending at least one of the first and second routing information inquiry message to a visitor mobile switching centre or a visitor location register representing the first or second visitor information device or the entity storing the subscriber location information,
starting the monitoring of the information indicating a change of the address when sending the first routing information inquiry message,
receiving the routing information request from a gateway device such as a gateway mobile switching centre,
being implemented in a subscriber information register, a home location register, or a network.

The method may comprise a check whether the another visitor information device, visitor mobile switching centre or visitor location register, is able to support pre-paging, and, when pre-paging is supported, to send at least one of the first and second routing information inquiry message together with an indication indicating that pre-paging is supported.

Embodiments of the method may comprise at least one or more, in any arbitrary combination, of:
storing, in case of a location update, a new visitor location register, VLR, address in a home location register, HLR,
monitoring a change of the VLR address e.g. in an interval between sending of the routing information inquiry message and receipt of a response to this request,
sending the second routing information inquiry message to the new VLR address, optionally with the same contents as the first routing information inquiry message,
initiating paging of the called subscriber by the visitor information device,
sending a received roaming number to the another device.

Embodiments of the method may comprise at least one or more, in any arbitrary combination, of:
accepting only a first positive response received in response to the first or second routing information inquiry message,
starting a timer when sending the first routing information inquiry message,
resetting the timer when sending the second routing information inquiry message,
repeating resending of the routing information inquiry message when detecting a further change of the monitored address,
checking whether the visitor information device supports pre-paging before starting the method according to any one of the preceding claims,
applying the method to location update procedures e.g. in 2G and 3G networks, to inter-VLR location update, or to other update procedures.

Embodiments of the method may comprise at least one or more, in any arbitrary combination, of:
monitoring the change of the address, or information indicating a change of the address, by
   monitoring address changes of a VLR address,
monitoring, or being informed by, a notification interface between instances of a home location register processing a location update, and sending routing information or provide routing number messages and procedures,
polling the address of the entity storing subscriber location information, in a database of a subscriber information register such as a home location register,
performing a first polling of the address for detecting a change of the address, only after a defined time interval after sending the first inquiry message,
after the first polling, repeating the polling in time distances shorter than the defined time interval.

In accordance with one or more embodiments of the invention, an apparatus may comprise
means for sending a first routing information inquiry message to a first visitor information device in response to receiving a routing information request from another device, means for monitoring information indicating a change of an address of an entity storing subscriber location information, and
means for sending a second routing information inquiry message to another visitor information device in response to detecting a change of the address of the entity storing the subscriber location information.

The apparatus may comprise or be a subscriber information register, preferably a home location register, or a part, module, chipset of or for a subscriber information register such as a home location register.

In accordance with one or more embodiments of the invention, the apparatus may comprise:
at least one of the first and second routing information inquiry messages is a number inquiry message or a provide routing number request, and/or
wherein the apparatus is configured to send the routing information inquiry message to a visitor mobile switching centre or a visitor location register.

In accordance with one or more embodiments of the invention, the apparatus may comprise means, or be configured, to check whether the another visitor information device, visitor mobile switching centre or visitor location register, is able to support pre-paging,
and, when pre-paging is supported, to send the routing information inquiry message together with an indication indicating that pre-paging is supported by a terminal.

In accordance with one or more embodiments of the invention, the apparatus may comprise at least one or more, in any arbitrary combination, of:
means for storing, in case of a location update, a new visitor location register, VLR, address in a home location register, HLR,
means for monitoring a change of the VLR address e.g. in an interval between sending of the routing information inquiry message and receipt of a response to this request,
means for sending the second routing information inquiry message to the new VLR address, optionally with the same contents as the first routing information inquiry message,
means for initiating paging of the called subscriber by the visitor information device,
means for sending a received roaming number to the another device.

In accordance with one or more embodiments of the invention, the apparatus may comprise at least one or more, in any arbitrary combination, of:
means for accepting only a first positive response received in response to the first or second routing information inquiry message,
means for starting a timer when sending the first routing information inquiry message,
means for resetting the timer when sending the second routing information inquiry message,
means for repeating resending of the routing information inquiry message when detecting a further change of the monitored address,
means for checking whether the visitor information device supports pre-paging before starting the method according to any one of the preceding claims,
means for location update procedures e.g. in 2G and 3G networks, inter-VLR location update, or other update procedures.

In accordance with one or more embodiments of the invention, the apparatus may comprise at least one or more, in any arbitrary combination, of:
means monitoring the change of the address, or information indicating a change of the address, by
   monitoring address changes a change in the VLR address,
   monitoring or being informed by a notification interface between instances of a home location register processing a location update, and sending routing information or provide routing number messages and procedures,
   polling the address of the entity storing subscriber location information, in a database of a subscriber information register such as a home location register,
   performing a first polling of the address for detecting a change of the address, only after a defined time interval after sending the first inquiry message,
   after the first polling, repeating the polling in time distances shorter than the defined time interval.

In accordance with one or more embodiments of the invention, a computer program product is provided which comprises code means configured to carry out or implement, when run on a processor, a method as mentioned above. The computer program product may be embodied on a computer-readable medium.

In accordance with one or more embodiments of the invention, a network is provided which comprises an apparatus e.g. such as mentioned above, and at least one of a visitor location register, a visitor mobile switching center, and a gateway mobile switching center.

For the purpose of the present invention as described herein above, it should be noted that any access or network technology may be used which may be any technology by means of which a user equipment can access or communicate with a network. The network may be any device, unit or means by which a mobile or stationary entity or other user equipment may connect to and/or utilize services offered by the network. Such services may include, among others, data and/or (audio-) visual communication, data download etc.

Generally, the present invention is also applicable in those network/terminal environments relying on a data packet based transmission scheme according to which data are transmitted in data packets and which are for example based on the Internet Protocol IP. The present invention is, however, not limited thereto, and any other present or future IP or mobile IP version, or, more generally, a protocol following similar principles is also applicable. The user equipment entity may be any device, unit or means by which a system user may experience services from a network.

The sequence of method steps described above or shown in the drawings can be implemented in any other sequence arbitrarily deviating from the above described or shown sequence of steps, or may include more or less steps. Further, the method, apparatuses and devices, may include only one, more or all of the features described above or shown in the drawings, in any arbitrary combination. The method steps may be implemented as software code portions and be run using a processor at a network element or terminal, can be software code independent, or can be specified using any known or future developed programming language as long as the functionality defined by the method steps is preserved. Generally, any method step is suitable to be implemented as software or by hardware without changing the idea of the present invention in terms of the functionality implemented. Method steps and/or devices, units or means may be implemented as hardware components at a mobile station or network element or module thereof, may be hardware independent, and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. Devices, units or means (e.g. User equipment, CSCF) can be implemented as individual devices, units, means, chipsets, modules, or part of devices, and may also be implemented in a distributed fashion throughout a system, as long as the functionality of the device, unit or means is preserved.
- MSRN: Mobile Subscriber Roaming Number
- PRN: Provide Roaming Number
- SRI: Send Routing Information
- MSC: Mobile Switching Centre
- VLR: Visitor Location Register

## Claims

1. A method for routing information inquiry, comprising:
sending a first routing information inquiry message to a first visitor information device in response to receiving a routing information request from another device,
monitoring an address change, or information indicating an address change, of an address of an entity storing subscriber location information, and
sending a second routing information inquiry message to another visitor information device in response to detecting a change of the address of the entity storing the subscriber location information.

2. A method according to claim 1, comprising at least one of the following:
at least one of the first and second routing information inquiry messages is a number inquiry message or a provide roaming number request,
sending at least one of the first and second routing information inquiry message to a visitor mobile switching centre or a visitor location register representing the first or second visitor information device or the entity storing the subscriber location information,
starting the monitoring of the information indicating a change of the address when sending the first routing information inquiry message,
receiving the routing information request from a gateway device such as a gateway mobile switching centre,
being implemented in a subscriber information register, a home location register, or a network.

3. A method according to claim 1 or 2, comprising at least one of:
a check whether the another visitor information device, visitor mobile switching centre or visitor location register, is able to support pre-paging,
sending the first routing information inquiry message, or at least one of the first and second routing information inquiry messages, together with an indication indicating that pre-paging is supported, the sending optionally depending on whether or not pre-paging is supported.

4. A method according to any one of the preceding claims, comprising at least one or more, in any arbitrary combination, of:
storing, in case of a location update, a new visitor location register, VLR, address in a home location register, HLR,
monitoring a change of the VLR address e.g. in an interval between sending of the routing information inquiry message and receipt of a response to this request,
sending the second routing information inquiry message to the new VLR address, optionally with the same contents as the first routing information inquiry message,
initiating paging of the called subscriber by the visitor information device,
sending a received roaming number to the another device.

5. A method according to any one of the preceding claims, comprising at least one or more, in any arbitrary combination, of:
accepting only a first positive response received in response to the first or second routing information inquiry message,
starting a timer when sending the first routing information inquiry message,
resetting the timer when sending the second routing information inquiry message,
repeating resending of the routing information inquiry message when detecting a further change of the monitored address,
checking whether the visitor information device supports pre-paging before starting the method according to any one of the preceding claims,
applying the method to location update procedures e.g. in 2G and 3G networks, to inter-VLR location update, or to other update procedures.

6. A method according to any one of the preceding claims, comprising at least one or more, in any arbitrary combination, of:
monitoring the change of the address, or information indicating a change of the address, by
monitoring address changes of a VLR
address,
monitoring, or being informed by, a notification interface between instances of a home location register processing a location update, and sending routing information or provide routing number messages and procedures,
polling the address of the entity storing subscriber location information, in a database of a subscriber information register such as a home location register,
performing a first polling of the address for detecting a change of the address, only after a defined time interval after sending the first inquiry message,
after the first polling, repeating the polling in time distances shorter than the defined time interval.

7. An apparatus comprising
means for sending a first routing information inquiry message to a first visitor information device in response to receiving a routing information request from another device, means for monitoring information indicating a change of an address of an entity storing subscriber location information, and
means for sending a second routing information inquiry message to another visitor information device in response to detecting a change of the address of the entity storing the subscriber location information.

8. An apparatus according to claim 7, wherein the apparatus is a subscriber information register, preferably a home location register, or a part, module, chipset of or for a subscriber information register such as a home location register.

9. An apparatus according to claim 7 or 8, wherein at least one of the first and second routing information inquiry messages is a number inquiry message or a provide routing number request, and/or
wherein the apparatus is configured to send the routing information inquiry message to a visitor mobile switching centre or a visitor location register.

10. An apparatus according to claim 7, 8 or 9,
wherein the apparatus is configured to check whether the another visitor information device, visitor mobile switching centre or visitor location register, is able to support prepaging,
and, when pre-paging is supported, to send the routing information inquiry message together with an indication indicating that pre-paging is supported by a terminal.

11. An apparatus according to any one of claims 7 to 10, comprising at least one or more, in any arbitrary combination, of:
means for storing, in case of a location update, a new visitor location register, VLR, address in a home location register, HLR,
means for monitoring a change of the VLR address e.g. in an interval between sending of the routing information inquiry message and receipt of a response to this request,
means for sending the second routing information inquiry message to the new VLR address, optionally with the same contents as the first routing information inquiry message,
means for initiating paging of the called subscriber by the visitor information device,
means for sending a received roaming number to the another device.

12. An apparatus according to any one of claims 7 to 11, comprising at least one or more, in any arbitrary combination, of:
means for accepting only a first positive response received in response to the first or second routing information inquiry message,
means for starting a timer when sending the first routing information inquiry message,
means for resetting the timer when sending the second routing information inquiry message,
means for repeating resending of the routing information inquiry message when detecting a further change of the monitored address,
means for checking whether the visitor information device supports pre-paging before starting the method according to any one of the preceding claims,
means for location update procedures e.g. in 2G and 3G networks, inter-VLR location update, or other update procedures.

13. An apparatus according to any one of claims 7 to 12, comprising at least one or more, in any arbitrary combination, of:
means monitoring the change of the address, or information indicating a change of the address, by
monitoring address changes a change in the VLR address,
monitoring or being informed by a notification interface between instances of a home location register processing a location update, and sending routing information or provide routing number messages and procedures,
polling the address of the entity storing subscriber location information, in a database of a subscriber information register such as a home location register,
performing a first polling of the address for detecting a change of the address, only after a defined time interval after sending the first inquiry message,
after the first polling, repeating the polling in time distances shorter than the defined time interval.

14. Computer program product, comprising code means configured to carry out or implement, when run on a processor, a method according to any one of claims 1 to 6.

15. Computer program product according to claim 14, embodied on a computer-readable medium.

16. A network, comprising an apparatus according to any one of the apparatus claims 7 to 13, and at least one of a visitor location register, a visitor mobile switching center, and a gateway mobile switching center.
